# EUROPÄISCHE PATENTSCHRIFT

(11) **EP 3 567 684 B1**
(45) Veröffentlichungstag und Bekanntmachung des Hinweises auf die Patenterteilung: **13.04.2022**
(21) Anmeldenummer: 19160079.0
(22) Anmeldetag: 28.02.2019
(51) Int. Cl.: H01R 13/502, H01R 13/52, G02B 6/36

(54) **STECKVERBINDERTEIL**
CONNECTOR PART
ÉLÉMENT DE CONNECTEUR ENFICHABLE

(30) Priorität: 07.05.2018 DE 202018102532 U
(43) Veröffentlichungstag der Anmeldung: 13.11.2019
(73) Patentinhaber: Neutrik AG, 9494 Schaan (LI)
(72) Erfinder: Koch, Matthias, 6840 Götzis (AT); Zechmann, Kevin, 6710 Nenzing (AT)
(74) Vertreter: Torggler & Hofmann Patentanwälte - Rankweil

(56) Entgegenhaltungen:
- EP-A1- 3 196 684
- EP-A2- 2 395 609
- GB-A- 2 299 460
- US-A- 6 086 400

## Beschreibung

Die vorliegende Erfindung betrifft ein Steckverbinderteil für eine optische und/oder elektrische Steckverbindung, wobei das Steckverbinderteil ein Gehäuse aufweist und das Gehäuse ein erstes Gehäuseteil und zumindest ein zweites Gehäuseteil aufweist, und das erste Gehäuseteil und das zweite Gehäuseteil mittels einer lösbaren Schraubverbindung in einem verbundenen Zustand miteinander verschraubt sind und an dem ersten Gehäuseteil eine fixe Verzahnung fixiert ist und an dem zweiten Gehäuseteil ein Sperrring des Steckverbinderteils und eine Vorspannfeder des Steckverbinderteils gelagert sind, wobei der Sperrring in Richtungen parallel zu einer Längsrichtung des zweiten Gehäuseteils auf dem zweiten Gehäuseteil verschiebbar gelagert ist und die Vorspannfeder den Sperrring in Richtung hin zu einer Eingriffsstellung vorspannt und der Sperrring in der Eingriffsstellung in die fixe Verzahnung eingreift, wobei im verbundenen Zustand die Schraubverbindung in der Eingriffsstellung des Sperrrings zum Verhindern eines Aufschraubens der Schraubverbindung blockiert ist und wobei im verbundenen Zustand die Schraubverbindung in einer Freigabestellung des Sperrrings, in der der Sperrring entgegen der Vorspannung der Vorspannfeder von der fixen Verzahnung abgehobenen ist, zum Aufschrauben der Schraubverbindung drehbar ist.

Steckverbinderteile dieser Art sind an sich bekannt. Solche Steckverbinderteile für eine optische Steckverbindung werden z.B. unter dem Handelszeichen OpticalCon am Markt angeboten. Der Sperrring und sein Eingriff in die fixe Verzahnung sollen verhindern, dass die Schraubverbindung zwischen dem ersten und dem zweiten Gehäuseteil versehentlich geöffnet wird. Bei gattungsgemäßen Steckverbinderteilen ist vielmehr vorgesehen, dass der Sperrring gezielt in seine Freigabestellung gebracht werden muss, bevor die Schraubverbindung zwischen den beiden Gehäuseteilen aufgeschraubt werden kann.

Bei der gattungsgemäßen EP 3 196 684 A1 kommt als Sperrring ein sehr flacher Metallring zum Einsatz, welcher Ausnehmungen aufweist, in welche die fixe Verzahnung in der Eingriffsstellung des Sperrrings eingreift. Die Praxis zeigt, dass sich diese beim Stand der Technik bekannten Sperrringe nur schwer bedienen lassen. Es ist sogar schon zu Schnittverletzungen an diesen beim Stand der Technik verwendeten Sperrringen gekommen.

Aus der US 6,086,400 A und der EP 2 395 609 A2 sind verdeckt angeordnete Sperrringe mit Verzahnungen bekannt. In der GB 2 299 460 A dient ein Sperrring mit Verzahnung der Sicherung einer Gewindehülse gegenüber einem Gehäuseteil.

Aufgabe der Erfindung ist es, eine Verbesserung vorzuschlagen, die die oben genannten Probleme bei gattungsgemäßen Steckverbinderteilen zu beseitigen hilft.

Hierfür schlägt die Erfindung ein Steckverbinderteil der oben genannten Art vor, bei dem vorgesehen ist, dass der Sperrring eine in der Längsrichtung des zweiten Gehäuseteils längserstreckte Grifffläche und eine Gegenverzahnung mit von der Grifffläche in Richtung hin zur fixen Verzahnung abstehenden Zähnen aufweist.

Durch die in Längsrichtung des zweiten Gehäuseteils längserstreckte Grifffläche des Sperrrings kann der Sperrring besser als beim Stand der Technik gegriffen werden, um ihn gezielt gegen die Vorspannung der Vorspannfeder aus der Eingriffsstellung zu ziehen, um dann die Schraubverbindung aufschrauben und die beiden Gehäuseteile voneinander trennen zu können. Durch die längserstreckte und damit gegenüber dem Stand der Technik größere Grifffläche, wie auch durch die Tatsache der erfindungsgemäßen Ausgestaltung der Gegenverzahnung mit ihren von der Grifffläche in Richtung hin zur fixen Verzahnung abstehenden Zähnen wird darüber hinaus die Verletzungsgefahr beim Betätigen des Sperrrings herabgesetzt, da der Eingriff zwischen der fixen Verzahnung und der Gegenverzahnung gegenüber dem eingangs genannten Stand der Technik weiter von dem Bereich des Sperrrings, an dem dieser gegriffen wird, entfernt ist. Im Sinne einer möglichst großen Grifffläche, welche gut zu greifen ist, sehen bevorzugte Varianten der Erfindung vor, dass die Grifffläche des Sperrrings in der Längsrichtung des zweiten Gehäuseteils eine Längserstreckung von zumindest 2mm (Millimeter), vorzugsweise von zumindest 3mm, aufweist. Besonders bevorzugt liegt diese Längserstreckung im Bereich von 2mm bis 6mm. Allgemein gesprochen bedeutet der Begriff der längserstreckten Grifffläche, dass der Sperrring in Richtung orthogonal zu seiner Umfangsrichtung auch eine gewisse Ausdehnung hat, sodass eben eine gut mit den Fingern greifbare Grifffläche zur Verfügung gestellt ist. Der Begriff der längserstreckten Grifffläche bedeutet nicht, dass der Sperrring in dieser Richtung seine größte Ausdehnung haben muss.

Grundsätzlich kann der Sperrring gemäß der Erfindung aus verschiedenen Materialien ausgebildet sein. Es kommen auch Metallteile, Gussteile, insbesondere Metalldruckgussteile, und dergleichen in Frage. Besonders bevorzugt handelt es sich beim Sperrring aber um ein Kunststoffteil. Vorzugsweise ist der Sperrring einstückig ausgebildet. Als Kunststoffteil kann er z.B. im Spritzguss kostengünstig in größeren Stückzahlen hergestellt werden. Besonders bevorzugt ist der Sperrring ein Spritzgussteil, welches aus Kunststoff gefertigt sein kann.

Erfindungsgemäße Steckverbinderteile können sowohl zur Übertragung von optischen Signalen als auch zur Übertragung von elektrischen Signalen als auch zur Übertragung von elektrischer Leistung über eine Steckverbindung genützt werden. Auch Hybridsteckverbinderteile, welche sowohl optische als auch elektrische Kontakte haben, sind gemäß der Erfindung möglich. Eine entsprechende Steckverbindung weist in der Regel zwei Steckverbinderteile auf, welche zusammengesteckt werden können, um so z.B. zwei Kabel oder ein Kabel mit einem Gerät zu verbinden. Die optischen und/oder elektrischen Kontakte von solchen Steckverbindungen bzw. ihren erfindungsgemäßen Steckverbinderteilen können, wie beim Stand der Technik an sich bekannt, ausgebildet sein, sodass dies hier nicht mehr beschrieben werden muss.

Die am ersten Gehäuseteil fixierte Verzahnung wird hier der eindeutigen sprachlichen Zuordnung wegen durchgehend als fixe Verzahnung bezeichnet. Sie kann einstückig am ersten Gehäuseteil angeformt aber auch anderweitig zunächst als separates Bauteil hergestellt und dann am ersten Gehäuseteil befestigt bzw. fixiert werden. Der Begriff der Fixierung bedeutet hierbei, dass diese fixe Verzahnung sich nicht relativ zum ersten Gehäuseteil bewegen kann.

Die Verzahnung des Sperrrings wird durchgehend als Gegenverzahnung bezeichnet, um hier eine klare sprachliche Unterscheidung zu ermöglichen. Die Vorspannfeder ist allgemein gesprochen ein elastisches Element, welches eine Vorspannung auf den Sperrring in Richtung hin zur Eingriffsstellung aufbringt. Die Vorspannfeder kann eine Spiralfeder, ein Blattfederpaket oder dergleichen sein oder z.B. auch als Elastomerkörper usw. ausgebildet werden. Die Längsrichtung des zweiten Gehäuseteils ist die Richtung der Längserstreckung des zweiten Gehäuseteils. Im miteinander verbundenen Zustand entspricht diese Längsrichtung in der Regel auch der Längsrichtung des ersten Gehäuseteils bzw. des gesamten Gehäuses des erfindungsgemäßen Steckverbinderteils. Der Begriff des Aufschraubens der Schraubverbindung beschreibt den Schraubvorgang, welcher durchgeführt werden muss, um die Schraubverbindung zu öffnen, also um die beiden Gehäuseteile voneinander zu trennen. Der Begriff des Zuschraubens der Schraubverbindung beschreibt den dazu entgegengesetzten Schraubvorgang, welcher durchgeführt werden muss, um die Schraubverbindung zu schließen, also um die beiden Gehäuseteile miteinander zu verbinden.

In bevorzugten Ausgestaltungsformen ist in der Grifffläche des Sperrrings zumindest eine Vertiefung ausgebildet. Man könnte bei der Vertiefung auch von einer Kehlung oder einem Kanal sprechen. Die Vertiefung kann zum einen den Vorteil haben, dass sich der Sperrring hierdurch einfacher greifen und betätigen lässt. Besonders bevorzugte Varianten sehen vor, dass die Vertiefung als eine im Sperrring umlaufende Nut ausgebildet ist. Es kann in diesem Zusammenhang auch vorgesehen sein, dass eine Befestigungsschnur einer Verschlusskappe des Steckverbinderteils in der als umlaufende Nut ausgebildeten Vertiefung angeordnet ist. In solchen Ausgestaltungsformen dient die Vertiefung also dann nicht nur der Verbesserung der Greifbarkeit des Sperrrings sondern auch zusätzlich noch als Mittel zur Befestigung der Verschlusskappe des Steckverbinderteils. Die so befestigte Befestigungsschnur stellt dann einen Verlierschutz für die Verschlusskappe dar. Der Begriff der Schnur ist in diesem Zusammenhang allgemein zu verstehen, es kann sich auch um ein Seil, Draht, Drahtseil oder um ein sonst irgendwie länglich erstrecktes entsprechend flexibles Objekt wie eine Kette oder dergleichen handeln.

Bevorzugte Varianten der Erfindung sehen vor, dass die fixe Verzahnung am ersten Gehäuseteil als eine Abfolge von ringförmig aufeinanderfolgend angeordneten und jeweils unmittelbar aneinander anschließenden Zähnen ausgebildet ist. In anderen Worten ist die fixe Verzahnung am ersten Gehäuseteil also bevorzugt so ausgebildet, dass ein Zahn unmittelbar an den nächsten anschließt bzw. auf den nächsten Zahn folgt und die so angeordneten Zähne eine gemeinsame, vorzugsweise in sich geschlossene, Ringstruktur ausbilden. Hierdurch kann ein sehr feines Raster geschaffen werden, sodass es schon bei relativ kleinen Drehwinkeln rasch wieder zum Verrasten kommt. Günstigerweise ist auch vorgesehen, dass die Zähne der Gegenverzahnung des Sperrrings als eine Abfolge von ringförmig aufeinanderfolgend angeordneten und jeweils unmittelbar aneinander anschließenden Zähnen ausgebildet ist. Um einerseits den Sperrring beim Zuschrauben der Schraubverbindung nicht extra in der Freigabestellung halten zu müssen, andererseits aber auch ein ungewolltes Aufschrauben der Schraubverbindung zu verhindern, sehen bevorzugte Varianten vor, dass die Zähne der fixen Verzahnung am ersten Gehäuseteil und die Zähne der Gegenverzahnung des Sperrrings jeweils eine steile Zahnflanke und jeweils eine flache Zahnflanke aufweisen und in der Eingriffsstellung des Sperrrings das Zusammenwirken der steilen Zahnflanken der Zähne der fixen Verzahnung mit den steilen Zahnflanken der Zähne der Gegenverzahnung des Sperrrings das Aufschrauben der Schraubverbindung blockiert und in der Eingriffsstellung des Sperrrings die flachen Zahnflanken der Zähne der fixen Verzahnung und die flachen Zahnflanken der Zähne der Gegenverzahnung des Sperrrings durch ein Abgleiten aneinander ein Zuschrauben der Schraubverbindung zulassen. Eine steile Zahnflanke verläuft dabei günstigerweise parallel oder in einem kleinen spitzen Winkel von z.B. höchstens 10°, vorzugsweise höchstens 5°, relativ zur Längsrichtung des zweiten Gehäuseteils, im verbundenen Zustand gesehen. Die flachen Zahnflanken weisen, in diesem verbundenen Zustand gesehen, günstigerweise einen relativ großen spitzen Winkel relativ zur Längsrichtung des zweiten Gehäuseteils von z.B. zumindest 70°, vorzugsweise zumindest 75°, auf. Um eine Verdrehsicherung des Sperrrings auf dem zweiten Gehäuseteil zu schaffen, ist günstigerweise vorgesehen, dass das zweite Gehäuseteil zumindest ein Formschlusselement und der Sperrring zumindest ein Gegenformschlusselement aufweisen und der Sperrring mittels des Eingriffs des Gegenformschlusselements in das Formschlusselement gegen ein Verdrehen des Sperrrings in seiner Umfangsrichtung auf dem zweiten Gehäuseteil gesichert ist. Das Formschlusselement kann dabei direkt in das zweite Gehäuseteil integriert sein. Im Sinne eines einfachen Montierens des Sperrrings und der Vorspannfeder am zweiten Gehäuseteil sehen bevorzugte Ausgestaltungsformen aber vor, dass das Formschlusselement ein am zweiten Gehäuseteil drehfest befestigbares Zusatzteil ist. Dies bedeutet, dass das Formschlusselement zunächst als separates Zusatzteil hergestellt und dann an entsprechender Stelle im Montagevorgang am zweiten Gehäuseteil drehfest befestigt wird. Das Gegenformschlusselement ist hingegen bevorzugt direkt in den Sperrring eingeformt. Das Gegenformschlusselement kann insbesondere auf der Innenseite des Sperrrings, welcher im montierten Zustand zum zweiten Gehäuseteil weist, eingeformt sein. Das Formschlusselement und das Gegenformschlusselement können über einen einzigen Formschluss, aber auch über eine Vielzahl von Formschlüssen miteinander zusammenwirken. Besonders bevorzugte Varianten sehen vor, dass das Formschlusselement eine einseitig offene Aufnahmeöffnung zum Aufstecken des Formschlusselementes auf das zweite Gehäuseteil aufweist. Beim Aufstecken des Formschlusselementes auf das zweite Gehäuseteil kann bei solchen Ausgestaltungsformen das zweite Gehäuseteil in die Aufnahmeöffnung eingeführt werden. Das Formschlusselement kann für den Formschluss mit dem Gegenformschlusselement des Sperrrings eine Außenverzahnung und für die verdrehsichere Befestigung auf dem zweiten Gehäuseteil eine Innenverzahnung aufweisen. Das zweite Gehäuseteil kann eine oder mehrere Formschlussrippen zum Zusammenwirken mit der Innenverzahnung des Formschlusselementes vorsehen.

Weitere Merkmale und Einzelheiten bevorzugter Varianten der Erfindung werden beispielhaft an einem erfindungsgemäßen Ausführungsbeispiel in der nachfolgenden Figurenbeschreibung erläutert. Es zeigen:
Fig. 1 eine Außenansicht auf ein erfindungsgemäßes Steckverbinderteil;
Fig. 2 den Bereich A aus Fig. 1 vergrößert;
Fig. 3 eine perspektivische Ansicht auf das erfindungsgemäße Steckverbinderteil;
Fig. 4 das erste Gehäuseteil und das zweite Gehäuseteil des erfindungsgemäßen Steckverbinderteils gemäß Fig. 1 im voneinander getrennten, aufgeschraubten Zustand;
Fig. 5 eine Explosionsdarstellung zu einigen, hier zum besseren Verständnis wesentlichen Bauteilen des erfindungsgemäßen Steckverbinderteils gemäß Fig. 1 und
Fig. 6 eine Detaildarstellung zum besseren Verständnis der Befestigung des Formschlusselementes am zweiten Gehäuseteil, wobei in Fig. 6 die Vorspannfeder nicht dargestellt ist.

Das erfindungsgemäße Steckverbinderteil 1 in diesem hier gezeigten Beispiel ist ein Teil einer optischen Steckverbindung, welche zur Verbindung von optisch leitenden Kabeln mit anderen optisch leitenden Kabeln oder zum Anschluss an Gehäuse von Geräten verwendet werden kann. Die jeweiligen Gegensteckverbinderteile zur Vervollständigung der Steckverbindungen sind hier nicht dargestellt. Sie können, wie beim Stand der Technik z.B. bei der eingangs genannten Steckerserie OpticalCon ausgebildet sein und müssen hier nicht weiter erläutert werden.

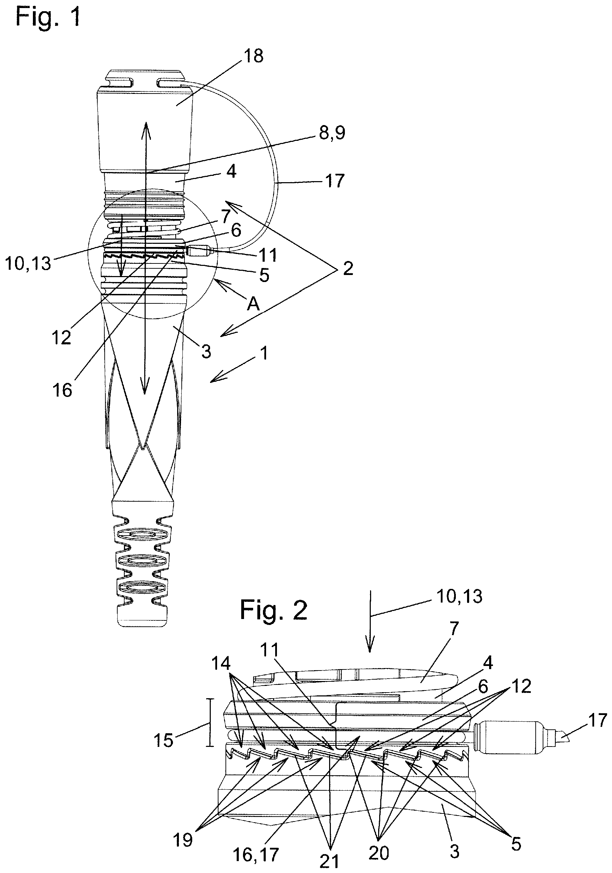

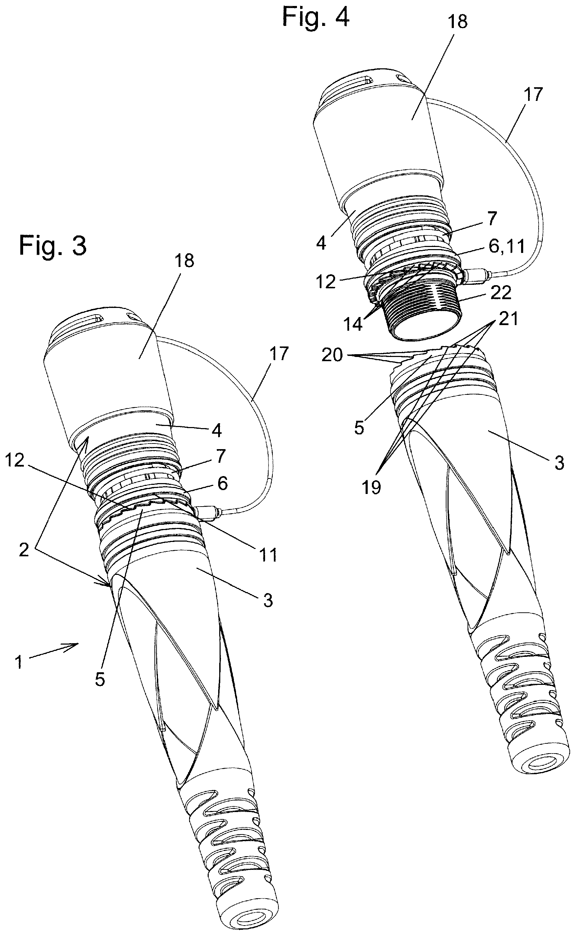

Das Gehäuse 2 des Steckverbinderteils 1 besteht jedenfalls aus dem ersten Gehäuseteil 3 und dem zweiten Gehäuseteil 4, welche mittels einer Schraubverbindung miteinander verschraubt sind. Fig. 1 zeigt den verbundenen Zustand, in dem die beiden Gehäuseteile 3 und 4 miteinander verschraubt sind. Fig. 4 zeigt den auseinandergeschraubten Zustand. Hier ist gut das Außengewinde 22 des zweiten Gehäuseteils 4 zu sehen. Das korrespondierende, zusammen mit dem Außengewinde 22 die Schraubverbindung bildende Innengewinde am ersten Gehäuseteil 3 ist nicht zu sehen aber entsprechend dem Stand der Technik ausgebildet. Am ersten Gehäuseteil 3 ist die fixe Verzahnung 5 fixiert. Dies bedeutet, dass die fixe Verzahnung 5 relativ zum ersten Gehäuseteil 3 nicht bewegt werden kann. Die fixe Verzahnung 5 kann direkt am ersten Gehäuseteil 3 ausgebildet bzw. angeformt oder als Zusatzteil zunächst gefertigt und dann entsprechend am ersten Gehäuseteil 3 fixiert werden. Auf dem zweiten Gehäuseteil 4 sind der Sperrring 6 und die Vorspannfeder 7 angeordnet. Der Sperrring 6 ist in Richtungen 8 parallel zur Längsrichtung 9 des zweiten Gehäuseteils 4 auf diesem zweiten Gehäuseteil 4 verschiebbar gelagert. Die Vorspannfeder 7 spannt den Sperrring 6 in Richtung 10 hin zu einer Eingriffsstellung vor. In der hier in Fig. 1 dargestellten Eingriffsstellung greift der Sperrring 6 in die fixe Verzahnung 5 ein. Hierdurch wird im verbundenen Zustand, wenn sich der Sperrring 6 in der Eingriffsstellung befindet, ein Aufschrauben der Schraubverbindung zwischen den beiden Gehäuseteilen 3 und 4 blockiert. Um die Gehäuseteile 3 und 4 auseinanderschrauben zu können, muss der Sperrring 6 entgegen der Vorspannung der Vorspannfeder 7 entgegen der Richtung 10 von der fixen Verzahnung 5 abgehoben werden, erst dann und bei entsprechend in der Freigabestellung zurückgehaltenen Sperrring 6, kann dann ein Auseinanderschrauben der Schraubverbindung zwischen den Gehäuseteilen 3 und 4 erfolgen. Dabei sind die fixe Verzahnung 5 des ersten Gehäuseteils 3 und die Gegenverzahnung 12 am Sperrring 6 in diesem Freigabezustand dann nicht mehr in Eingriff.

Erfindungsgemäß weist der Sperrring 6 eine in der Längsrichtung 9 des zweiten Gehäuseteils 4 längserstreckte Grifffläche 11 auf. Die Gegenverzahnung 12 des Sperrrings 6 weist von der Grifffläche 11 in Richtung 13 hin zur fixen Verzahnung 5 abstehende Zähne 14 auf. Die Vorteile dieser erfindungsgemäßen Ausgestaltungsmerkmale gegenüber dem Stand der Technik wurden eingangs erläutert.

Die Längserstreckung 15 der Grifffläche 11 des Sperrrings 6 in der Längsrichtung 9 des zweiten Gehäuseteils 4 beträgt günstigerweise zumindest 2mm, vorzugsweise zumindest 3mm. Besonders bevorzugt ist der Sperrring 6 als Kunststoffteil, insbesondere als Spritzgussteil, ausgebildet. Natürlich sind aber auch andere Materialien wie z.B. Metall oder dergleichen denkbar.

Fig. 2 zeigt den Bereich A aus Fig. 1 vergrößert. Hier ist besonders gut zu sehen, dass die fixe Verzahnung 5 am ersten Gehäuseteil 3 eine Abfolge von ringförmig aufeinander folgend angeordneten und jeweils unmittelbar aneinander anschließenden Zähne 19 aufweist. Analog bilden auch die Zähne 14 der Gegenverzahnung 12 des Sperrrings 6 eine Abfolge von ringförmig aufeinander folgend angeordneten und jeweils unmittelbar aneinander anschließenden Zähnen 14. Sowohl die Zähne 14 der Gegenverzahnung 12 des Sperrrings 6 als auch die Zähne 19 der fixen Verzahnung 5 des ersten Gehäuseteils 3 weisen jeweils steile Zahnflanken 20 und flache Zahnflanken 21 auf. Das Zusammenwirken der steilen Zahnflanken 20 zwischen den Zähnen 14 des Sperrrings 6 und den Zähnen 19 des ersten Gehäuseteils 3 in der in den Fig. 1 und 2 gezeigten Eingriffsstellung blockiert das Aufschrauben der Schraubverbindung. Die flachen Zahnflanken 21 der Zähne 19 der fixen Verzahnung 5 und die flachen Zahnflanken 21 der Zähne 14 der Gegenverzahnung 12 des Sperrrings 6 ermöglichen hingegen ein Abgleiten aneinander und damit ein Zuschrauben der Schraubverbindung, ohne dass der Sperrring 6 hierzu entgegen der Vorspannung der Vorspannfeder 7 und entgegen der Richtung 10 und 13 in die Freigabestellung gezogen werden muss. Diese Ausgestaltungsform der Verzahnung ermöglicht somit ein Zuschrauben der Schraubverbindung zwischen den Gehäuseteilen 3 und 4 in der Eingriffsstellung, ohne dass hierfür gesondert am Sperrring 6 gezogen werden muss, während ein Aufschrauben der Schraubverbindung nur dann möglich ist, wenn der Sperrring entgegen der Richtung 10 und 13 und damit entgegen der Vorspannung der Vorspannfeder 7 aus der Eingriffsstellung gemäß der Fig. 1 und 2 in die Freigabestellung gezogen wird, in der die Gegenverzahnung 12 des Sperrrings 6 nicht mehr in die fixe Verzahnung 5 am ersten Gehäuseteil 3 eingreift.

In der Grifffläche 11 des Sperrrings 6 befindet sich eine Vertiefung 16, welche hier in diesem Ausführungsbeispiel als umlaufende Nut ausgebildet ist. Durch diese Vertiefung 16 kann der Sperrring 6 an seiner Grifffläche 11 besonders gut gegriffen werden. Wie eingangs bereits erläutert, kann die umlaufende Nut aber auch als ein Teil einer Verliersicherung für die Verschlusskappe 18 des Steckverbinderteils 1 verwendet werden, indem man die an der Verschlusskappe 18 befestigte Befestigungsschnur 17 in der als umlaufende Nut ausgebildeten Vertiefung 16 anordnet bzw. darin befestigt. Dies ist ebenfalls besonders gut in Fig. 2 zu sehen.

Die Fig. 3 und 4 zeigen die bereits erläuterten Merkmale noch einmal jeweils aus einer anderen Perspektive.

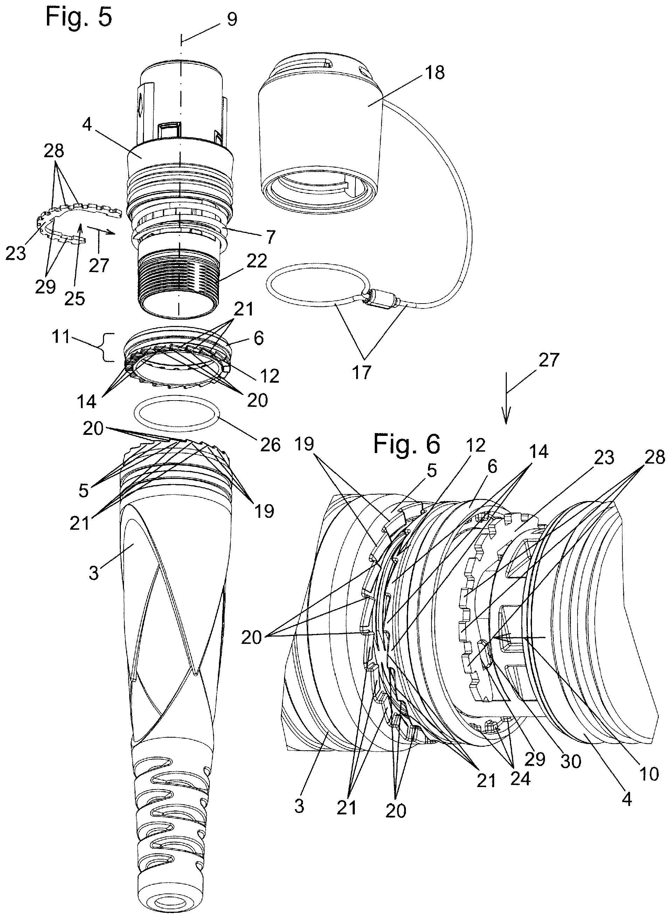

In der Explosionsdarstellung gemäß Fig. 5 sind die beiden Gehäuseteile 3 und 4 auseinandergeschraubt. Der Sperrring 6 und auch das nachfolgend noch erläuterte Formschlusselement 23 sind, wie auch die Verschlusskappe 18, vom zweiten Gehäuseteil 4 abgenommen dargestellt. Zusätzlich ist noch ein an sich bekannter Dichtungsring 26 zu sehen, welcher die Schraubverbindung zwischen dem Außengewinde 22 und dem hier nicht sichtbaren korrespondierenden Innengewinde im ersten Gehäuseteil 3 abdichtet, wenn die beiden Gehäuseteile 3 und 4 entsprechend zusammengeschraubt, also im verbundenen Zustand sind.

Das Formschlusselement 23 ist hier als am zweiten Gehäuseteil 4 drehfest befestigbares Zusatzteil ausgebildet. Es dient als Verdrehsicherung des Sperrrings 6, sodass dieser sich nicht relativ zum zweiten Gehäuseteil 4 um dessen Längsrichtung 9 drehen kann. Hierzu weist der Sperrring 6 eine in diesem Ausführungsbeispiel innen, also in Richtung hin zum zweiten Gehäuseteil 4 liegendes Gegenformschlusselement 24, auf. Im gezeigten Ausführungsbeispiel sind dies die in Fig. 6 sichtbaren, innen liegenden, als eine Abfolge von Zähnen ausgebildeten Gegenformschlusselemente 24, welche einstückig in diesem Ausführungsbeispiel am Sperrring 6 angeformt sind. Das Formschlusselement 23 weist eine einseitig offene Aufnahmeöffnung 25 auf, mit der es auf das zweite Gehäuseteil 4 in der in Fig. 5 dargestellten Richtung 27 orthogonal zur Längsrichtung 9 des zweiten Gehäuseteils 4 aufgesteckt werden kann. Das dargestellte Formschlusselement 23 weist eine Folge von Außenverzahnungen 28 auf, welche dem formschlüssigen Eingriff in die Gegenformschlusselementen 24 am Sperrring 6 dient. Die Innenverzahnung 29 am hier gezeigten Formschlusselement 23 dient hingegen zusammen mit der Form der Aufnahmeöffnung 25 und der entsprechend korrespondierenden Form am zweiten Gehäuseteil 4 der verdrehsicheren Befestigung des Formschlusselementes 23 am zweiten Gehäuseteil 4. Hierzu wird das Formschlusselement 23 aus der in Fig. 5 dargestellten Stellung zunächst in Aufschieberichtung 27 so auf das zweite Gehäuseteil 4 aufgeschoben, dass das zweite Gehäuseteil 4 in der Aufnahmeöffnung 25 des Formschlusselements 23 zu liegen kommt. Anschließend wird das Formschlusselement 23 in der in Fig. 6 dargestellten Richtung 10 auf die Formschlussrippen 30 des zweiten Gehäuseteils 4 aufgeschoben, sodass die Formschlussrippen 30 in der Innenverzahnung 29 des Formschlusselements 23 zu liegen kommen. Das Ergebnis ist eine verdrehsichere Befestigung des Formschlusselementes 23 auf dem zweiten Gehäuseteil 4 und damit über den Eingriff des Formschlusselementes 23 in die Gegenformschlusselemente 24 am Sperrring 6 eine Verdrehsicherung des Sperrrings 6 auf dem zweiten Gehäuseteil 4. Trotz dieser Verdrehsicherung ist der Sperrring 6 dann immer noch in den Richtungen 10 und 13 und in den entsprechenden Gegenrichtungen auf dem zweiten Gehäuseteil 4 verschiebbar gelagert, wobei eben die Vorspannfeder 7, wie eingangs bereits erläutert, den Sperrring 6 in Richtung 10 bzw. 13 hin zur fixen Verzahnung 5 des ersten Gehäuseteils 3 vorspannt, wenn die beiden Gehäuseteile 3 und 4 entsprechend mittels der Schraubverbindung sich im verbundenen Zustand befinden.

In Fig. 6 ist die Vorspannfeder 7 nicht dargestellt, damit man das Formschlusselement 23 auf dem zweiten Gehäuseteil 4 besser sieht.

### Legende zu den Hinweisziffern:

- 1: Steckverbinderteil
- 2: Gehäuse
- 3: erstes Gehäuseteil
- 4: zweites Gehäuseteil
- 5: fixe Verzahnung
- 6: Sperrring
- 7: Vorspannfeder
- 8: Richtung
- 9: Längsrichtung
- 10: Richtung
- 11: Grifffläche
- 12: Gegenverzahnung
- 13: Richtung
- 14: Zahn
- 15: Längserstreckung
- 16: Vertiefung
- 17: Befestigungsschnur
- 18: Verschlusskappe
- 19: Zahn
- 20: steile Zahnflanke
- 21: flache Zahnflanke
- 22: Außengewinde
- 23: Formschlusselement
- 24: Gegenformschlusselement
- 25: Aufnahmeöffnung
- 26: Dichtungsring
- 27: Aufschieberichtung
- 28: Außenverzahnung
- 29: Innenverzahnung
- 30: Formschlussrippe

## Patentansprüche

1. Steckverbinderteil (1) für eine optische und/oder elektrische Steckverbindung, wobei das Steckverbinderteil (1) ein Gehäuse (2) aufweist und das Gehäuse (2) ein erstes Gehäuseteil (3) und zumindest ein zweites Gehäuseteil (4) aufweist, und das erste Gehäuseteil (3) und das zweite Gehäuseteil (4) mittels einer lösbaren Schraubverbindung in einem verbundenen Zustand miteinander verschraubt sind und an dem ersten Gehäuseteil (3) eine fixe Verzahnung (5) fixiert ist und an dem zweiten Gehäuseteil (4) ein Sperrring (6) des Steckverbinderteils (1) und eine Vorspannfeder (7) des Steckverbinderteils (1) gelagert sind, wobei der Sperrring (6) in Richtungen (8) parallel zu einer Längsrichtung (9) des zweiten Gehäuseteils (4) auf dem zweiten Gehäuseteil (4) verschiebbar gelagert ist und die Vorspannfeder (7) den Sperrring (6) in Richtung (10) hin zu einer Eingriffsstellung vorspannt und der Sperrring (6) in der Eingriffsstellung in die fixe Verzahnung (5) eingreift, wobei im verbundenen Zustand die Schraubverbindung in der Eingriffsstellung des Sperrrings (6) zum Verhindern eines Aufschraubens der Schraubverbindung blockiert ist und wobei im verbundenen Zustand die Schraubverbindung in einer Freigabestellung des Sperrrings (6), in der der Sperrring (6) entgegen der Vorspannung der Vorspannfeder (7) von der fixen Verzahnung (5) abgehobenen ist, zum Aufschrauben der Schraubverbindung drehbar ist, **dadurch gekennzeichnet, dass** der Sperrring (6) eine in der Längsrichtung (9) des zweiten Gehäuseteils (4) längserstreckte Grifffläche (11) und eine Gegenverzahnung (12) mit von der Grifffläche (11) in Richtung (13) hin zur fixen Verzahnung (5) abstehenden Zähnen (14) aufweist.

2. Steckverbinderteil (1) nach Anspruch 1, **dadurch gekennzeichnet, dass** die Grifffläche (11) des Sperrrings (6) in der Längsrichtung (9) des zweiten Gehäuseteils (4) eine Längserstreckung (15) von zumindest 2 mm, vorzugsweise von zumindest 3 mm, aufweist, und/oder dass der Sperrring (6) ein Kunststoffteil ist.

3. Steckverbinderteil (1) nach Anspruch 1 oder 2, **dadurch gekennzeichnet, dass** in der Grifffläche (11) des Sperrrings (6) zumindest eine Vertiefung (16) ausgebildet ist.

4. Steckverbinderteil (1) nach Anspruch 3, **dadurch gekennzeichnet, dass** die Vertiefung (16) als eine im Sperrring (6) umlaufende Nut ausgebildet ist, wobei vorzugsweise vorgesehen ist, dass eine Befestigungsschnur (17) einer Verschlusskappe (18) des Steckverbinderteils (1) in der als umlaufende Nut ausgebildeten Vertiefung (16) angeordnet ist.

5. Steckverbinderteil (1) nach einem der Ansprüche 1 bis 4, **dadurch gekennzeichnet, dass** die fixe Verzahnung (5) am ersten Gehäuseteil (3) als eine Abfolge von ringförmig aufeinanderfolgend angeordneten und jeweils unmittelbar aneinander anschließenden Zähnen (19) ausgebildet ist.

6. Steckverbinderteil (1) nach Anspruch 5, **dadurch gekennzeichnet, dass** die Zähne (19) der fixen Verzahnung (5) des ersten Gehäuseteils (3) und die Zähne (14) der Gegenverzahnung (12) des Sperrrings (6) jeweils eine steile Zahnflanke (20) und jeweils eine flache Zahnflanke (21) aufweisen und in der Eingriffsstellung des Sperrrings (6) das Zusammenwirken der steilen Zahnflanken (20) der Zähne (19) der fixen Verzahnung (5) mit den steilen Zahnflanken (20) der Zähne (14) der Gegenverzahnung (12) des Sperrrings (6) ein Aufschrauben der Schraubverbindung blockiert und in der Eingriffsstellung des Sperrrings (6) die flachen Zahnflanken (20) der Zähne (19) der fixen Verzahnung (5) und die flachen Zahnflanken (21) der Zähne (14) der Gegenverzahnung (12) des Sperrrings (6) durch ein Abgleiten aneinander ein Zuschrauben der Schraubverbindung zulassen.

7. Steckverbinderteil (1) nach einem der Ansprüche 1 bis 6, **dadurch gekennzeichnet, dass** die Zähne (14) der Gegenverzahnung (12) des Sperrrings (6) als eine Abfolge von ringförmig aufeinanderfolgend angeordneten und jeweils unmittelbar aneinander anschließenden Zähnen (14) ausgebildet sind.

8. Steckverbinderteil (1) nach einem der Ansprüche 1 bis 7, **dadurch gekennzeichnet, dass** das zweite Gehäuseteil (4) zumindest ein Formschlusselement (23) und der Sperrring (6) zumindest ein Gegenformschlusselement (24) aufweisen und der Sperrring (6) mittels des Eingriffs des Gegenformschlusselements (24) in das Formschlusselement (23) gegen ein Verdrehen des Sperrrings (6) in seiner Umfangsrichtung auf dem zweiten Gehäuseteil (4) gesichert ist.

9. Steckverbinderteil (1) nach Anspruch 8, **dadurch gekennzeichnet, dass** das Formschlusselement (23) ein am zweiten Gehäuseteil (4) drehfest befestigbares Zusatzteil ist und/oder dass das Gegenformschlusselement (24) direkt in den Sperrring (6) eingeformt ist.

10. Steckverbinderteil (1) nach Anspruch 8 oder 9, **dadurch gekennzeichnet, dass** das Formschlusselement (23) eine einseitig offene Aufnahmeöffnung (25) zum Aufstecken des Formschlusselementes (23) auf das zweite Gehäuseteil (4) aufweist.

## Claims

1. A plug-in connector part (1) for an optical and/or electrical plug-in connection, wherein the plug-in connector part (1) has a housing (2) and the housing (2) has a first housing part (3) and at least one second housing part (4), and the first housing part (3) and the second housing part (4) are in a connected state screwed to one another by means of a detachable screw connection and a fixed toothing (5) is fixed to the first housing part (3) and a locking ring (6) of the plug-in connector part (1) and a pre-tensioning spring (7) of the plug-in connector part (1) are mounted on the second housing part (4), wherein the locking ring (6) is displaceably mounted on the second housing part (4) in directions (8) parallel to a longitudinal direction (9) of the second housing part (4) and the pre-tensioning spring (7) pre-tensions the locking ring (6) in the direction (10) towards an engagement position and the locking ring (6) engages the fixed toothing (5) in the engagement position, wherein the screw connection is, in the connected state, blocked in the engagement position of the locking ring (6) to prevent unscrewing of the screw connection and wherein the screw connection is, in the connected state, rotatable in a release position of the locking ring (6), in which the locking ring (6) is lifted from the fixed toothing (5) against the pretensioning of the pre-tensioning spring (7), to unscrew the screw connection, **characterised in that** the locking ring (6) has a grip surface (11), elongate in the longitudinal direction (9) of the second housing part (4), and counter toothing (12), with teeth (14) projecting from the grip surface (11) in the direction (13) towards the fixed toothing (5).

2. A plug-in connector part (1) according to claim 1, **characterised in that** in the longitudinal direction (9) of the second housing part (4), the grip surface (11) of the locking ring (6) has a longitudinal extension (15) of at least 2 mm, preferably of at least 3 mm, and/or **in that** the locking ring (6) is a plastics part.

3. A plug-in connector part (1) according to claim 1 or 2, **characterised in that** at least one depression (16) is formed in the grip surface (11) of the locking ring (6).

4. A plug-in connector part (1) according to claim 3, **characterised in that** the depression (16) is in the form of a groove encircling in the locking ring (6), wherein it is preferably provided that a fastening cord (17) of a closure cap (18) of the plug-in connector part (1) is arranged in the depression (16) formed as an encircling groove.

5. A plug-in connector part (1) according to any one of claims 1 to 4, **characterised in that** the fixed toothing (5) on the first housing part (3) is formed as a sequence of teeth (19) arranged in an annularly successive manner and in each case directly adjoining one another.

6. A plug-in connector part (1) according to claim 5, **characterised in that** the teeth (19) of the fixed toothing (5) of the first housing part (3) and the teeth (14) of the counter toothing (12) of the locking ring (6) each have a steep tooth flank (20) and each have a flat tooth flank (21) and in the engagement position of the locking ring (6) an unscrewing of the screw connection is blocked through the co-operation of the steep tooth flanks (20) of the teeth (19) of the fixed toothing (5) with the steep tooth flanks (20) of the teeth (14) of the counter toothing (12) of the locking ring (6) and in the engagement position of the locking ring (6) a screwing up of the screw connection is permitted through a sliding against one another of the flat tooth flanks (20) of the teeth (19) of the fixed toothing (5) and the flat tooth flanks (21) of the teeth (14) of the counter toothing (12) of the locking ring (6).

7. A plug-in connector part (1) according to any one of claims 1 to 6, **characterised in that** the teeth (14) of the counter toothing (12) of the locking ring (6) are formed as a sequence of teeth (14) arranged in an annularly successive manner and in each case directly adjoining one another.

8. A plug-in connector part (1) according to any one of claims 1 to 7, **characterised in that** the second housing part (4) has at least one positive fit element (23) and the locking ring (6) has at least one counter positive fit element (24) and the locking ring (6) is, by means of the engagement of the counter positive fit element (24) in the positive fit element (23), secured on the second housing part (4) against rotation of the locking ring (6) in its circumferential direction.

9. A plug-in connector part (1) according to claim 8, **characterised in that** the positive fit element (23) is an additional part securable to the second housing part (4) in a rotationally-fixed manner and/or **in that** the counter positive fit element (24) is moulded directly into the locking ring (6).

10. A plug-in connector part (1) according to claim 8 or 9, **characterised in that** the positive fit element (23) has a receiving opening (25), open at one side, for mounting of the positive fit element (23) onto the second housing part (4).

## Revendications

1. Élément de connecteur enfichable (1) pour une connexion enfichable optique et/ou électrique, l'élément de connecteur enfichable (1) étant muni d'un boîtier (2) et le boîtier (2) étant muni d'une première partie de boîtier (3) et d'au moins une deuxième partie de boîtier (4), et la première partie de boîtier (3) et la deuxième partie de boîtier (4) étant vissées l'une à l'autre dans un état relié au moyen d'un raccord à vis réversible, et une denture fixe (5) étant fixée à la première partie de boîtier (3), et une bague de verrouillage (6) de l'élément de connecteur (1) et un ressort de précontrainte (7) de l'élément de connecteur (1) étant montés sur la deuxième partie de boîtier (4), la bague de verrouillage (6) étant montée sur la deuxième partie de boîtier (4) de manière à pouvoir être déplacée dans des sens (8) parallèles à une direction longitudinale (9) de la deuxième partie de boîtier (4), et le ressort de précontrainte (7) sollicitant la bague de verrouillage (6) en direction (10) d'une position d'engagement, et la bague de verrouillage (6) s'engageant dans la denture fixe (5) dans la position d'engagement, le raccord à vis étant bloqué, à l'état relié et dans la position d'engagement de la bague de verrouillage (6), afin d'empêcher le dévissage du raccord à vis, et le raccord à vis peut être tourné, à l'état connecté et dans une position de libération de la bague de verrouillage (6) dans laquelle la bague de verrouillage (6) est écartée de la denture fixe (5) contre la sollicitation du ressort de précontrainte (7), pour dévisser le raccord à vis, **caractérisé en ce que** la bague de verrouillage (6) est munie d'une surface de préhension (11) s'étendant longitudinalement dans la direction longitudinale (9) de la deuxième partie de boîtier (4) et d'une contre-denture (12) ayant des dents (14) saillant de la surface de préhension (11) en direction (13) de la denture fixe (5).

2. Élément de connecteur (1) selon la revendication 1, **caractérisé en ce que** la surface de préhension (11) de la bague de verrouillage (6) présente une extension longitudinale (15) d'au moins 2 mm, de préférence d'au moins 3 mm, dans la direction longitudinale (9) de la deuxième partie de boîtier (4), et/ou **en ce que** la bague de verrouillage (6) est une pièce en plastique.

3. Élément de connecteur (1) selon la revendication 1 ou 2, **caractérisé en ce qu'**au moins un évidement (16) est formé dans la surface de préhension (11) de la bague de verrouillage (6).

4. Élément de connecteur (1) selon la revendication 3, **caractérisé en ce que** l'évidement (16) est réalisé sous la forme d'une rainure circonférentielle dans la bague de verrouillage (6), où il est de préférence prévu de disposer un cordon de fixation (17) d'un capuchon de fermeture (18) de l'élément de connecteur (1) dans l'évidement (16) réalisé sous la forme d'une rainure circonférentielle.

5. Élément de connecteur (1) selon l'une des revendications 1 à 4, **caractérisé en ce que** la denture fixe (5) sur la première partie de boîtier (3) est réalisée sous la forme d'une suite de dents (19) disposées en une succession en forme d'anneau et toutes directement adjacentes les unes aux autres.

6. Élément de connecteur (1) selon la revendication 5, **caractérisé en ce que** les dents (19) de la denture fixe (5) de la première partie de boîtier (3) et les dents (14) de la contre-denture (12) de la bague de verrouillage (6) présentent chacune un flanc de dent raide (20) et chacune un flanc de dent plat (21), et, dans la position d'engagement de la bague de verrouillage (6), l'interaction des flancs de dent raides (20) des dents (19) de la denture fixe (5) avec les flancs de dent raides (20) des dents (14) de la contre-denture (12) de la bague de verrouillage (6) bloque le dévissage du raccord à vis, et, dans la position d'engagement de la bague de verrouillage (6), les flancs de dent plats (20) des dents (19) de la denture fixe (5) et les flancs de dent plats (21) des dents (14) de la contre-denture (12) de la bague de verrouillage (6) permettent le vissage du raccord à vis par glissement des uns contre les autres.

7. Élément de connecteur (1) selon l'une des revendications 1 à 6, **caractérisé en ce que** les dents (14) de la contre-denture (12) de la bague de verrouillage (6) sont réalisées sous la forme d'une suite de dents (14) disposées en succession en forme d'anneau et toutes directement adjacentes les unes aux autres.

8. Élément de connecteur (1) selon l'une des revendications 1 à 7, **caractérisé en ce que** la deuxième partie de boîtier (4) est munie d'au moins un élément de verrouillage par complémentarité de formes (23) et la bague de verrouillage (6) est munie d'au moins un contre-élément de verrouillage par complémentarité de formes (24), et la bague de verrouillage (6) est bloquée sur la deuxième partie de boîtier (4) contre une rotation de la bague de verrouillage (6) dans sa direction circonférentielle par engagement du contre-élément de verrouillage par complémentarité de formes (24) dans l'élément de verrouillage par complémentarité de formes (23).

9. Élément de connecteur (1) selon la revendication 8, **caractérisé en ce que** l'élément de verrouillage par complémentarité de forme (23) est une pièce supplémentaire qui peut être fixée à la deuxième partie de boîtier (4) de manière fixe en rotation, et/ou **en ce que** le contre-élément de verrouillage par complémentarité de forme (24) est moulé directement dans la bague de verrouillage (6).

10. Élément de connecteur (1) selon la revendication 8 ou 9, **caractérisé en ce que** l'élément de verrouillage par complémentarité de forme (23) est muni d'une ouverture de réception (25) ouverte sur un côté pour enfiler l'élément de verrouillage par complémentarité de forme (23) sur la deuxième partie de boîtier (4).
